(19) Europäisches Patentamt
European Patent Office
Office européen des brevets

(11) **EP 4 502 736 A1**

(12) **EUROPEAN PATENT APPLICATION**
published in accordance with Art. 153(4) EPC

(43) Date of publication:
**05.02.2025 Bulletin 2025/06**

(51) International Patent Classification (IPC):
***G05B 13/04*** (2006.01)

(21) Application number: 22934718.2

(86) International application number:
**PCT/CN2022/120389**

(22) Date of filing: **22.09.2022**

(87) International publication number:
**WO 2023/184899 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2022 CN 202210315659**

(71) Applicants:
• **China Nuclear Power Technology Research
Institute Co., Ltd.
Shenzhen, Guangdong 518031 (CN)**
• **Ling Dong Nuclear Power Co., Ltd.
Shenzhen, Guangdong 518000 (CN)**
• **China General Nuclear Power Corporation
Shenzhen, Guangdong 518028 (CN)**
• **CGN Power Co., Ltd
Shenzhen, Guangdong 518028 (CN)**

(72) Inventors:
• **DING, Peng
Shenzhen, Guangdong 518031 (CN)**
• **LI, Wenhuai
Shenzhen, Guangdong 518031 (CN)**
• **CHEN, Shu
Shenzhen, Guangdong 518031 (CN)**
• **XIA, Wenqing
Shenzhen, Guangdong 518031 (CN)**
• **YU, Fengwan
Shenzhen, Guangdong 518031 (CN)**
• **DUAN, Chengjie
Shenzhen, Guangdong 518031 (CN)**
• **CUI, Dawei
Shenzhen, Guangdong 518031 (CN)**
• **LIN, Jiming
Shenzhen, Guangdong 518031 (CN)**

(74) Representative: **Thomas, Tomos Daniel et al
Kilburn & Strode LLP
Lacon London
84 Theobalds Road
London WC1X 8NL (GB)**

(54) **AUTONOMOUS CONTROL METHOD AND APPARATUS OF NUCLEAR REACTOR, AND COMPUTER DEVICE**

(57) An autonomous control method and apparatus of a nuclear reactor, a computer device, a storage medium, and a computer program product. The method comprises: determining a target state trajectory and a reactor full-state trajectory of a nuclear reactor (102); performing trajectory optimization on the reactor full-state trajectory according to the target state trajectory to obtain a control action combination of the nuclear reactor (104), the control action combination being used for ensuring that the deviation between the target state trajectory and the reactor full-state trajectory reaches a preset value and meets the dynamic evolution characteristics of the reactor; and performing autonomous control on the nuclear reactor on the basis of the control action combination (106). The use of the method improves the control precision of the nuclear reactor.

FIG. 1

**Description**

**CROSS-REFERENCE TO RELATED APPLICATIONS**

This application claims priority to Chinese Patent Application No. 2022103156590, entitled "AUTONOMOUS CONTROL METHOD AND APPARATUS OF NUCLEAR REACTOR, AND COMPUTER DEVICE" and filed on March 29, 2022, the entire contents of which are incorporated herein by reference.

**TECHNICAL FIELD**

The present disclosure relates to the field of nuclear reaction technologies, and in particular to an autonomous control method and apparatus of a nuclear reactor, a computer device, a storage medium, and a computer program product.

**BACKGROUND**

Generally, an operation process of a reactor includes uncertainties from different sources from multiple perspectives such as measurement, control effects, and reactor state transition dynamic models. Therefore, the reactor is generally required to be controlled within a full-state confidence space. Measurement signals of the reactor, including neutron detector signals, thermocouple readings or loop coolant flow rates, pressurizer pressure, and the like, are directly measurable. However, there are also a large number of safety-related state parameters that cannot be directly measured, such as an effective neutron multiplication coefficient keff, macroscopic burnup, and microscopic nucleon density.

Autonomous control over a nuclear reactor requires the reactor to have more flexible operation and an autonomous control capability to ensure long-term reliable operation of the system in harsh or remote service environments. However, existing reactor power control mainly uses a proportional integral differential (PID control method. An output signal of the PID controller drives a reactor control rod driving mechanism, thereby introducing reactivity for reactor power control, resulting in low control accuracy of autonomous control over the nuclear reactor.

**SUMMARY**

Based on this, there is a need to provide, with respect to the above technical problems, an autonomous control method and apparatus of a nuclear reactor, a computer device, a storage medium, and a computer program product that can improve control accuracy of autonomous control over the nuclear reactor.

In a first aspect, the present disclosure provides an autonomous control method of a nuclear reactor. The method includes:

determining a target state trajectory and a reactor full-state trajectory of a nuclear reactor;

performing trajectory optimization on the reactor full-state trajectory according to the target state trajectory to obtain a control action combination of the nuclear reactor, the control action combination being used for ensuring that a deviation between the target state trajectory and the reactor full-state trajectory reaches a preset value and meets dynamic evolution characteristics of the reactor; and

performing autonomous control on the nuclear reactor on the basis of the control action combination.

In an embodiment, determining the target state trajectory and the reactor full-state trajectory of the nuclear reactor includes:

determining the target state trajectory of the nuclear reactor; and

inputting full-state parameters of the nuclear reactor into a pre-built integrated prediction model for prediction to obtain the reactor full-state trajectory.

In an embodiment, prior to determining the target state trajectory of the nuclear reactor, the method further includes:

pre-building a mathematical model and a machine learning model of the nuclear reactor; and

obtaining the integrated prediction model by integrating the mathematical model and the machine learning model.

In an embodiment, pre-building the mathematical model and the machine learning model of the nuclear reactor includes:

building the mathematical model of the nuclear reactor, the mathematical model including at least a core neutron point reactor dynamics model, a thermal hydraulic model, a reactivity feedback model, and a nuclide decay model; acquiring reactor operating samples of the nuclear reactor; and training different types of built machine learning models according to the reactor operating samples to obtain a trained machine learning model.

In an embodiment, performing trajectory optimization on the reactor full-state trajectory according to the target state trajectory to obtain the control action combination of the nuclear reactor includes:

determining reaction states and corresponding control actions in the reactor full-state trajectory; determining a first trajectory including the reactor states and the control actions on the basis of the dynamic evolution characteristics of the reactor; linearizing the first trajectory through Taylor approximation to obtain a second trajectory under an optimal strategy; and iterating the second trajectory until the second trajectory converges to the target state trajectory to obtain the control action combination of the nuclear reactor.

In an embodiment, prior to iterating the second trajectory until the second trajectory converges to the target state trajectory to obtain the control action combination of the nuclear reactor, the method further includes: updating next reactor state of the first trajectory according to an actual state transition function, and performing the step of linearizing the first trajectory through Taylor approximation to obtain a second trajectory under an optimal strategy.

In an embodiment, the machine learning model includes at least a deep neural network (DNN) prediction model, a recurrent neural network (RNN) prediction model, and a Gaussian regression based prediction model.

In a second aspect, the present disclosure provides an autonomous control apparatus of a nuclear reactor. The apparatus includes:

a determination module configured to determine a target state trajectory and a reactor full-state trajectory of a nuclear reactor; a trajectory optimization module configured to perform trajectory optimization on the reactor full-state trajectory according to the target state trajectory to obtain a control action combination of the nuclear reactor, the control action combination causing a deviation between the target state trajectory and the reactor full-state trajectory to reach a preset value and meet dynamic evolution characteristics of the reactor; and a control module configured to perform autonomous control on the nuclear reactor on the basis of the control action combination.

In a third aspect, the present disclosure further provides a computer device. The computer device includes a memory and a processor. The memory stores a computer program. The processor, when executing the computer program, implements the following steps:

determining a target state trajectory and a reactor full-state trajectory of a nuclear reactor; performing trajectory optimization on the reactor full-state trajectory according to the target state trajectory to obtain a control action combination of the nuclear reactor, the control action combination being used for ensuring that a deviation between the target state trajectory and the reactor full-state trajectory reaches a preset value and meets dynamic evolution characteristics of the reactor; and performing autonomous control on the nuclear reactor on the basis of the control action combination.

In a fourth aspect, the present disclosure further provides a computer-readable storage medium. The computer-readable storage medium has a computer program stored therein. When the computer program is executed by a processor, the following steps are implemented:

determining a target state trajectory and a reactor full-state trajectory of a nuclear reactor; performing trajectory optimization on the reactor full-state trajectory according to the target state trajectory to obtain a control action combination of the nuclear reactor, the control action combination being used for ensuring that a deviation between the target state trajectory and the reactor full-state trajectory reaches a preset value and meets dynamic evolution characteristics of the reactor; and performing autonomous control on the nuclear reactor on the basis of the control action combination.

In a fifth aspect, the present disclosure further provides a computer program product. The computer program product includes a computer program. When the computer program is executed by a processor, the following steps are implemented:

determining a target state trajectory and a reactor full-state trajectory of a nuclear reactor;
performing trajectory optimization on the reactor full-state trajectory according to the target state trajectory to obtain a control action combination of the nuclear reactor, the control action combination being used for ensuring that a deviation between the target state trajectory and the reactor full-state trajectory reaches a preset value and meets dynamic evolution characteristics of the reactor; and
performing autonomous control on the nuclear reactor on the basis of the control action combination.

According to the autonomous control method and apparatus of a nuclear reactor, the computer device, the storage medium, and the computer program product above, by performing trajectory optimization on the reactor full-state trajectory according to the target state trajectory to obtain a control action combination of the nuclear reactor, wherein the control action combination causes a deviation between the target state trajectory and the reactor full-state trajectory to reach a preset value and meet dynamic evolution characteristics of the reactor, and performing autonomous control on the nuclear reactor on the basis of the control action combination, multi-objective operation optimization is realized in a large-state space, insufficiencies of PID single-input single-output or multi-input single-output control are solved, and accuracy of autonomous control over the nuclear reactor is effectively improved by dynamic programming.

## BRIEF DESCRIPTION OF THE DRAWINGS

In order to more clearly illustrate the technical solutions in embodiments of the present disclosure or the conventional art, the accompanying drawings used in the description of the embodiments or the conventional art will be briefly introduced below. It is apparent that, the accompanying drawings in the following description are only some embodiments of the present disclosure, and other drawings can be obtained by those of ordinary skill in the art from the provided drawings without creative efforts.

FIG. 1 is a schematic flowchart of an autonomous control method of a nuclear reactor according to an embodiment of the present disclosure;
FIG. 2 is a schematic diagram of integration of prediction models according to an embodiment of the present disclosure;
FIG. 3 is a schematic structural diagram of a DNN prediction model according to an embodiment of the present disclosure;
FIG. 4 is a schematic structural diagram of a RNN prediction model according to an embodiment of the present disclosure;
FIG. 5 is a schematic structural diagram of a Gaussian regression based prediction model according to an embodiment of the present disclosure;
FIG. 6 is a schematic flowchart of an autonomous control method of a nuclear reactor according to another embodiment of the present disclosure;
FIG. 7 is an effect diagram of autonomous control over a nuclear reactor according to an embodiment of the present disclosure;
FIG. 8 is a structural block diagram of an autonomous control apparatus of a nuclear reactor according to an embodiment of the present disclosure; and
FIG. 9 is a diagram of an internal structure of a computer device according to an embodiment of the present disclosure.

## DETAILED DESCRIPTION

The technical solutions in the embodiments of the present disclosure will be described clearly and completely below with reference to the accompanying drawings in the embodiments of the present disclosure. Obviously, the described embodiments are merely some of rather than all of the embodiments of the present disclosure. All other embodiments acquired by those of ordinary skill in the art without creative efforts based on the embodiments of the present disclosure shall fall within the protection scope of the present disclosure.

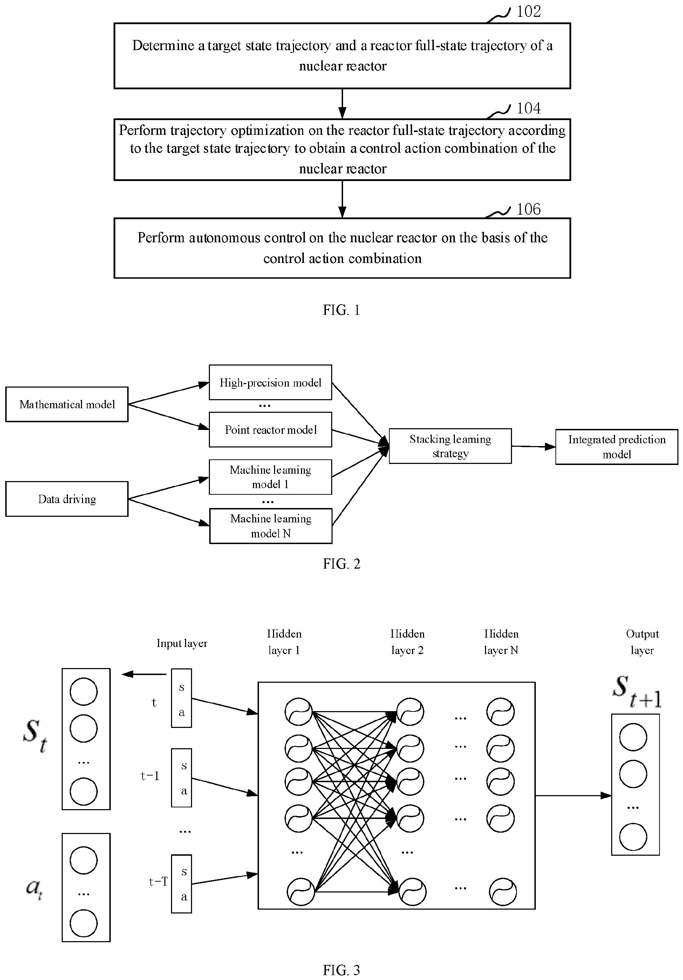

In an embodiment, as shown in FIG. 1, an autonomous control method of a nuclear reactor is provided. This embodiment is described based on an example in which the method is applied to a terminal. It may be understood that the method is also applicable to a server, or is applicable to a system including a terminal and a server and is implemented through interaction between the terminal and the server. In this embodiment, the method includes the following steps.

In step 102, a target state trajectory and a reactor full-state trajectory of a nuclear reactor are determined.

The nuclear reactor includes different types of reactors such as a second-generation reactor, a third-generation reactor (a pressurized water reactor, a boiling water reactor, or the like), and a fourthgeneration reactor (a metal-cooled fast reactor, a gas-cooled fast reactor, or a molten salt fast reactor).

The target state trajectory is predetermined reactor operating power levels of a nuclear reaction at different times. The target state trajectory is expressed as $s_{t,target}$. The reactor full-state trajectory is a state trajectory determined on the basis of full-state parameters of the nuclear reactor. The reactor full-state trajectory may be predicted on the basis of the full-state parameters of the nuclear reactor through an integrated prediction model.

The integrated prediction model is obtained by integrating the pre-built mathematical model and machine learning model of the nuclear reactor on the basis of a stacking technical framework. By building the mathematical model and the machine learning model, difficulty of building a reactor state transition model is reduced, and problems such as difficult modeling and slow convergence based on a traditional reactor mathematical model are avoided. Steps of integrating are shown in FIG. 2, including determining the mathematical model (including a point reactor model, a high-precision model, and the like) and the machine learning model (including a machine learning model 1, ..., and a machine learning model N) to be basic learning models, linearly regressing the basic learning models as a second-level learning model (including multiple linear regression, random forest regression, and the like), performing training through a stacking learning strategy, and averaging or weighted averaging prediction results of the models, to obtain the integrated prediction model.

The mathematical model may include, but is not limited to, a point reactor model, a onedimensional model, a three-dimensional model, and a fractional-order model. The point reactor model is taken as an example for description in this embodiment. The point reactor model includes a core neutron point reactor dynamics model, a thermal hydraulic model, a reactivity feedback model, and a nuclide decay model.

The point reactor dynamics model is expressed as:

$$\frac{dn_r}{dt} = \frac{\rho - \beta}{\ell} n_r + \sum_{i=1}^{m} \lambda_i C_{r,i} \qquad (1)$$

$$\frac{dC_{r,i}}{dt} = \frac{\beta_i}{\ell} n_r - \lambda_i C_{r,i} \qquad (2)$$

The thermal hydraulic model may be expressed as:

$$\frac{dT_f}{dt} = \frac{f_f p_0}{\mu_f} n_r + \frac{\Omega}{\mu_f} T_{cav} - \frac{\Omega}{\mu_f} T_f \qquad (3)$$

$$\frac{dT_{cav}}{dt} = \frac{1 - f_f}{\mu_c} p_0 n_r - \frac{2M + \Omega}{\mu_c} T_{cav} + \frac{\Omega}{\mu_c} T_f + \frac{2M}{\mu_c} T_{cin} \qquad (4)$$

The nuclide decay model may be expressed as:

$$\frac{dXe}{dt} = \gamma_{Xe} \Sigma_f n_r n_0 v + \lambda_I I_{od} - \sigma_{Xe} Xe \cdot n_r n_0 v - \lambda_{Xe} Xe \qquad (5)$$

$$\frac{dI_{od}}{dt} = \gamma_I \Sigma_f n_r n_0 v - \lambda_I I_{od} \qquad (6)$$

$$\frac{dPm}{dt} = \gamma_{pm} \Sigma_f n_r n_0 v - \lambda_{pm} Pm \qquad (7)$$

$$\frac{dSm}{dt} = -\sigma_{sm} Sm \cdot n_r n_0 v + \lambda_{pm} Pm \tag{8}$$

The reactivity feedback model may be expressed as:

$$\rho = \rho_0 + \rho_{Xe} + \rho_{Sm} + \rho_T + \rho_{rod} \tag{9}$$

$$\rho_T = \alpha_f \left(T_f - T_{f0}\right) + \alpha_c \left(T_{cav} - T_{cav0}\right) \tag{10}$$

$$\rho_{Xe} = -\frac{\sigma_{Xe}\left(Xe - Xe_0\right)}{\Sigma_f} \tag{11}$$

$$\rho_{Sm} = -\frac{\sigma_{Sm}\left(Sm - Sm_0\right)}{\Sigma_f} \tag{12}$$

Meanings of parameters in the point reactor dynamics model, the thermal hydraulic model, the nuclide decay model, and the reactivity feedback model are as follows:

| Variable | Meaning | Variable | Meaning |
|---|---|---|---|
| $n_r$ | Relative neutron density ratio $n_r = n/n_0$ | $n_0$ | Initial equilibrium neutron density ($1/cm^3$) |
| $n$ | Neutron density ($1/cm^3$) | $\rho$ | Core reactivity (dk) |
| $\rho_0$ | Initial residual reactivity in an ARO state of the core | $\beta_i$ | Ratio of an $i^{th}$ delayed neutron precursor group in the core, and $\beta = \sum_{i=1}^{m} \beta_i$ |
| $\ell$ | Effective prompt neutron lifetime (s) | $\lambda_i$ | Decay constant of the $i^{th}$ delayed neutron precursor group (1/s) |
| $C_{r,i}$ | Density of the $i^{th}$ delayed neutron precursor group | $S$ | Neutron source intensity ($1/cm^3/s$) |
| $S_0$ | External neutron source intensity ($1/cm^3/s$) | $S_r$ | Relative neutron intensity $S_r = S/n_0$ |
| $T_f$ | Core fuel average temperature (°C) | $T_{f0}$ | Core fuel equilibrium average temperature (°C) |
| $T_{cin}$ | Core inlet coolant average temperature (°C) | $T_{cout}$ | Core outlet coolant average temperature (°C) |
| $T_{cav}$ | Coolant average temperature $T_{cav} = \left(T_{cin} + T_{cout}\right)/2$ | $T_{cav0}$ | Coolant equilibrium average temperature (°C) |
| $f_f$ | Internal fuel power | $p_0$ | Nominal power (MW) |
| $\mu_f$ | Heat capacity of fuel and structural material (MW/°C) | $\Omega$ | Heat transfer efficiency between fuel and coolant (MW/°C) |
| $M$ | Coolant heat capacity (MW/°C) | $\mu_c$ | Coolant heat capacity (MW/°C) |
| $Xe$ | Xenon density ($1/cm^3$) | $Xe_0$ | Equilibrium xenon concentration ($1/cm^3$) |
| $Sm$ | Samarium density ($1/cm^3$) | $Sm_0$ | Equilibrium samarium concentration ($1/cm^3$) |

(continued)

| Variable | Meaning | Variable | Meaning |
|---|---|---|---|
| $Pm$ | Curium density (1/cm$^3$) | $I_{od}$ | Iodine density (1/cm$^3$) |
| $\nu$ | Nominal velocity of thermal neutrons (cm/s) | $\phi$ | Neutron density (1/cm$^2$/s) |
| $\Sigma_f$ | Macroscopic fission area (1/cm) | $\lambda_I$ | Iodine decay rate (1/s) |
| $\lambda_{Xe}$ | Xenon decay rate (1/s) | $\lambda_{pm}$ | Curium decay constant (1/s) |
| $\sigma_{Xe}$ | Xenon microscopic absorption interface (cm$^2$) | $\gamma_I$ | Iodine fission yield |
| $\gamma_{Xe}$ | Xenon fission yield | $\gamma_{pm}$ | Curium fission yield |
| $\sigma_{sm}$ | Samarium microscopic absorption interface | $\rho_T$ | Temperature reactivity negative feedback (dk) |
| $\rho_{Xe}$ | Xenon reactivity negative feedback (dk) | $\rho_{Sm}$ | Samarium reactivity negative feedback (dk) |
| $\rho_{rod}$ | Control rod reactivity negative feedback (dk) | $\alpha_f$ | Fuel temperature reactivity coefficient (dk/°C) |
| $\alpha_c$ | Coolant temperature reactivity coefficient (dk/°C) | | |

Parameters in a state space of the nuclear reactor include:
$s_t = [n_r, C_{r,1}, C_{r,2}, C_{r,3}, C_{r,4}, C_{r,5}, C_{r,6}, T_f, T_{cav}, Xe, I_{od}, Pm, Sm]$. Parameters in an action space of the reactor are $a_t = [\rho_{rod}, T_{cin}]$. Control functions of the nuclear reactor include reactivity insertion, including movement of a control rod or drum, soluble boron or other neutron absorbers. A core inlet temperature is changed by adjusting pressure and heat exchange of primary and secondary nuclear reactor systems.

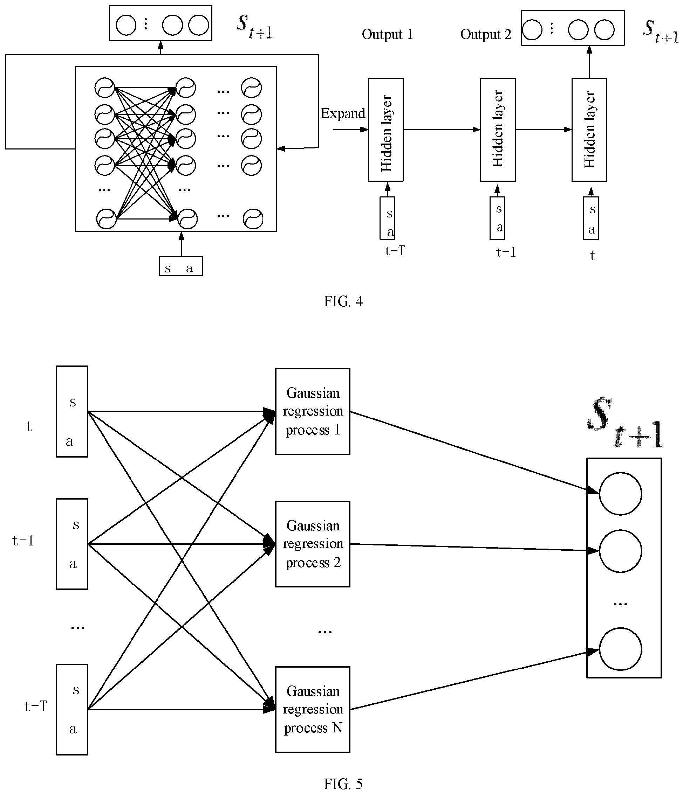

The machine learning model is learned from determined reactor state change samples. The reactor state change samples include the parameters in the state space and the action space of the reactor. The reactor state change samples may be acquired by, but not limited to, simulating a large amount of operating data based on a high-precision numerical reactor. The machine learning model includes at least a DNN prediction model (as shown in FIG. 3), a RNN prediction model (as shown in FIG. 4), a Gaussian regression based prediction model (as shown in FIG. 5), and the like.

FIG. 3 shows a DNN prediction model of the nuclear reactor according to an embodiment. Reactor operating samples at a time t include a state space vector and an action space vector. Sample data is run according to past T times (t, t-1, t-T+1) to predict a reactor state at the time t+1. The DNN prediction model includes an input layer, hidden layers 1-N, and an output layer. When complete state space parameters $S_t$ are obtained, historical information $S_{t-1}$ before a time step t is not required in the DNN.

A network structure of the reactor based on a RNN prediction model in FIG. 4 is not required to be very deep. That is, there is no need to provide lots of hidden layers. The sample data is run according to the past T times (t, t-1, t-T+1) to predict a reactor state at the time t+1. FIG. 5 shows a Gaussian regression based prediction model. The sample data is run according to the past T times (t, t-1, t-T+1), and Gaussian process regression processing is performed to predict a reactor state at the time t+1.

In step 104, trajectory optimization is performed on the reactor full-state trajectory according to the target state trajectory to obtain the control action combination of the nuclear reactor.

Performing trajectory optimization is performed on the reactor full-state trajectory according to the target state trajectory is to ensure a minimum deviation between the target state trajectory and the reactor full-state trajectory during power operation, meet a reaction requirement of the nuclear reaction, and meet the dynamic evolution characteristics of the reactor. The dynamic evolution characteristics refer to a relationship satisfied between the reactor state at the time t and the control action at the time t (which may be a linear relationship or a nonlinear relationship).

The control action combination includes reactor states and control actions that satisfy a target operating trajectory. The reactor states include a relative neutron density ratio, density of an ith delayed neutron precursor group (i is a positive integer), a core fuel average temperature, a coolant average temperature, xenon density, iodine density, curium density, samarium density, and the like. The control actions (which may be understood as control quantities) are used for control rod reactivity negative feedback and a core inlet coolant average temperature. It may be understood that a target operating trajectory is an operating trajectory under an ideal condition. The control action combination controls the nuclear reactor to ensure that the deviation between an actual operating state and a target operating state of the nuclear reactor is minimized. It may be understood that the control action combination causes the deviation between the target state trajectory and the reactor full-state trajectory to reach a preset value and meet the dynamic evolution characteristics of the reactor.

Specifically, according to the predetermined target operating trajectory in combination with the integrated prediction model, the reactor full-state trajectory is optimized to obtain the control action combination at each time of the reactor state.

In step 106, autonomous control on the nuclear reactor is performed on the basis of the control action combination.

Specifically, autonomous control on the nuclear reactor is performed according to the control action combination at each time. That is, the reactor control rod driving mechanism is driven according to the control action combination, thereby introducing reactivity for reactor power control.

In the autonomous control method of a nuclear reactor, by performing trajectory optimization on the reactor full-state trajectory according to the target state trajectory to obtain a control action combination of the nuclear reactor, wherein the control action combination causes a deviation between the target state trajectory and the reactor full-state trajectory to reach a preset value and meet dynamic evolution characteristics of the reactor, and performing autonomous control on the nuclear reactor on the basis of the control action combination, multi-objective operation optimization is realized in a large-state space, insufficiencies of PID single-input single-output or multi-input single-output control are solved, and accuracy of autonomous control over the nuclear reactor is effectively improved by dynamic programming.

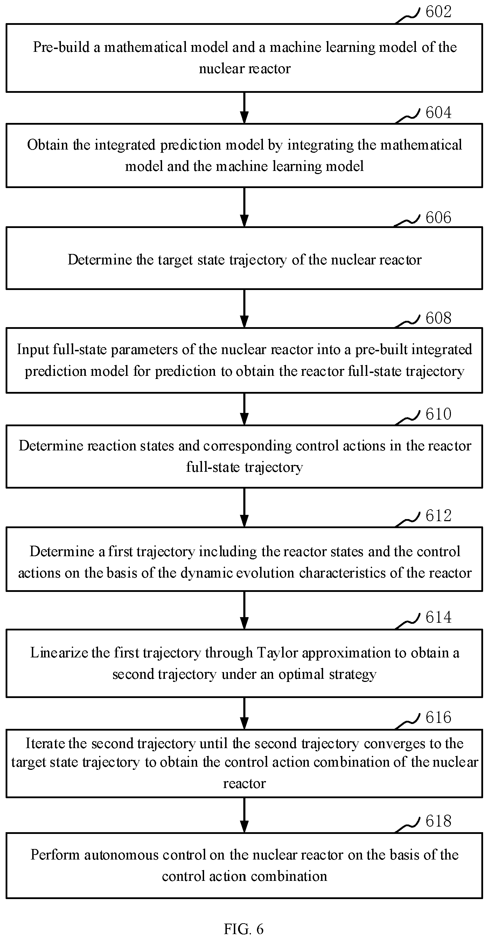

In another embodiment, as shown in FIG. 6, an autonomous control method of a nuclear reactor is provided. This embodiment is described based on an example in which the method is applied to a terminal. It may be understood that the method is also applicable to a server, or is applicable to a system including a terminal and a server and is implemented through interaction between the terminal and the server. In this embodiment, the method includes the following steps.

In step 602, a mathematical model and a machine learning model of the nuclear reactor are pre-built.

In step 604, the integrated prediction model is obtained by integrating the mathematical model and the machine learning model.

Specifically, the pre-built mathematical model and machine learning model of the nuclear reactor are integrated on the basis of the stacking technical framework to obtain the integrated prediction model.

In step 606, the target state trajectory of the nuclear reactor is determined.

Specifically, reactor operating power levels of the nuclear reaction at different times are acquired to obtain the target state trajectory of the nuclear reactor.

In step 608, full-state parameters of the nuclear reactor are inputted into a pre-built integrated prediction model for prediction to obtain the reactor full-state trajectory.

In step 610, reaction states and corresponding control actions are determined in the reactor full-state trajectory.

Specifically, a reaction state $s_t$ of a nuclear reactor system according to the reactor full-state trajectory, and an action $a_t$ (i.e., control action) in the reaction state $s_t$ is taken.

In step 612, a first trajectory including the reactor states and the control actions is determined on the basis of the dynamic evolution characteristics of the reactor.

During state transition of the reactor, the dynamic evolution characteristics $x_{t+1} = f(\tau_t)$ of the reactor are highly nonlinear functions.

Specifically, the first trajectory including the reactor states and the control actions is determined on the basis of the dynamic evolution characteristics of the reactor and a model based predictive control (MPC) method.

MPC may be expressed as:

$$\tau_{1:T}^{*} = \underset{\tau_t = (s_t, a_t)}{\arg\min} \sum_{t=1:T} \mathbf{w} \left( \mathbf{s}_t - \mathbf{s}_{t,\text{Target}} \right)^2 \quad \text{subject to: } x_1 = x_{init}, x_{t+1} = f\left( \tau_t \right)$$

$$= \underset{t=1:T}{\arg\min} \sum_t \left( \tau_t^{\mathrm{T}} C_t \tau_t + 2c_t^{\mathrm{T}} \tau_t \right) \quad \text{where, } C_t = diag\left( \mathbf{w} \right), c_t = -\mathbf{w}$$

where **w** denotes a weight of each variable (including measurable or unmeasurable hidden variables) in the state space, s denotes a reactor power level, $s_{t,target}$ denotes a reactor target power level, $\tau_t$ denotes a control action at the time t, $C_t$ denotes a diagonal coefficient of negative weight, and $x_t$ denotes a reactor state at the time t.

A reaction state $s_t$ of the nuclear reactor system is determined according to the reactor full-state trajectory, and an action $a_t$ (i.e., control action) at a nominal operating point in the reaction state $s_t$ is taken, to obtain the first trajectory

$$s_0^*, a_0^* \rightarrow s_1^*, a_1^* \rightarrow \cdots \rightarrow s_t^*, a_t^* \rightarrow \cdots \rightarrow s_T^*, a_T^*$$ including the reactor states and the control actions. The nominal operating point is a fixed point presupposed for linear approximation.

In step 614, the first trajectory is linearized through Taylor approximation to obtain a second trajectory under an optimal strategy.

The optimal strategy refers to determining the reactor states and the control actions that satisfy the target operating state.

Specifically, on the basis of the control over the reactor, the dynamic evolution characteristics $x_{t+1} = f(\tau_t)$ (a dynamic model) of the reactor are linearized according to the first trajectory, to obtain a linearized model:

$$s_{t+1} \approx F\left(s_t^*, a_t^*\right) + \nabla_s F\left(s_t^*, a_t^*\right) \cdot \left(s_t - s_t^*\right) + \nabla_a F\left(s_t^*, a_t^*\right) \cdot \left(a_t - a_t^*\right)$$

As can be seen, $s_{t+1}$ is a linear function of $s_t$ and $a_t$: $s_{t+1} \approx A_t \cdot s_t + B_t \cdot a_t$, that is, next reactor state of the reactor satisfies a linear relationship with a reactor state and a control action at a previous time. Therefore, it may be determined that

Taylor expansion on the function $\tau_t = (s_t, a_t)$ in

$$\tau_{1:T}^* = \underset{\tau_t = (s_t, a_t)}{\arg\min} \sum_{t=1:T} \mathbf{w}\left(\mathbf{s}_t - \mathbf{s}_{t,\text{Target}}\right)^2 \quad \text{subject to:} \quad x_1 = x_{init}, x_{t+1} = f\left(\tau_t\right)$$

$$= \underset{t=1:T}{\arg\min} \sum_t \left(\tau_t^\mathrm{T} C_t \tau_t + 2c_t^\mathrm{T} \tau_t\right) \quad \text{where,} \quad C_t = diag(\mathbf{w}), c_t = -\mathbf{w}$$

is approximately:

$$R\left(s_t, a_t\right) \approx R\left(s_t^*, a_t^*\right) + \nabla_s R\left(s_t^*, a_t^*\right)\left(s_t - s_t^*\right) + \nabla_a R\left(s_t^*, a_t^*\right)\left(a_t - a_t^*\right)$$

$$+ \frac{1}{2}\left(s_t - s_t^*\right)^\mathrm{T} H_{ss}\left(s_t - s_t^*\right) + \left(s_t - s_t^*\right)^\mathrm{T} H_{sa}\left(a_t - a_t^*\right)$$

$$+ \frac{1}{2}\left(a_t - a_t^*\right)^\mathrm{T} H_{aa}\left(a_t - a_t^*\right)$$

where $H_{sa}$ is a Hessian matrix of $R_t$ at a point $\left(s_t^*, a_t^*\right)$. $R_t$ is written as:
$R\left(s_t, a_t\right) = -s_t^\mathrm{T} U_t s_t - a_t^\mathrm{T} W_t a_t$. According to $R\left(s_t, a_t\right) = -s_t^\mathrm{T} U_t s_t - a_t^\mathrm{T} W_t a_t$, $x_{t+1} = f(\tau_t)$, which is a highly nonlinear function, is determined on the second trajectory that satisfies the target operating state:

$$s_0^*, \pi_0\left(s_0^*\right) \rightarrow s_1^*, \pi_1\left(s_1^*\right) \rightarrow \cdots \rightarrow s_T^*$$

Further, the first trajectory is linearized through Taylor approximation to obtain the second trajectory under the optimal strategy, next reactor state of the first trajectory is updated according to an actual state transition function, which may be expressed as $s_{t+1}^* = F\left(s_t^*, a_t^*\right)$, and the step of linearizing the first trajectory through Taylor approximation to obtain a second trajectory under an optimal strategy is continued.

In step 616, the second trajectory is iterated until the second trajectory converges to the target state trajectory to obtain the control action combination of the nuclear reactor.

Specifically, "the second trajectory is iterated until the second trajectory converges to the target state trajectory to obtain the control action combination of the nuclear reactor" may be understood as that when an actual operating trajectory of the nuclear reactor is determined, a nominal trajectory that meets a preset condition is determined on the basis of an actual state transition function of the reaction, to obtain a preset reactor state (i.e., approximate state) of each control action, and iteration is performed based on the above linearization function to generate next nominal trajectory until the nominal trajectory converges to the target trajectory to obtain the control action combination of the nuclear reactor.

In step 618, autonomous control on the nuclear reactor is performed on the basis of the control action combination.

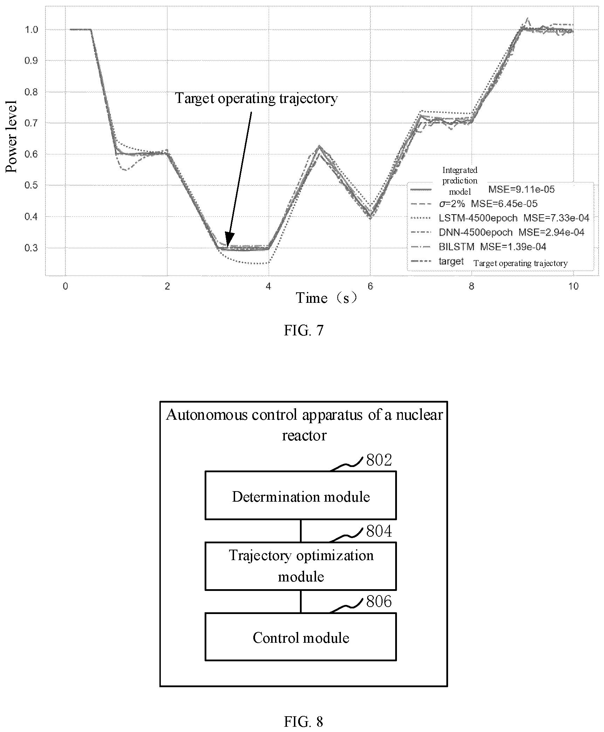

FIG. 7 is an effect diagram of autonomous control over the nuclear reactor on the basis of the control action combination determined by the integrated prediction model and the target operating trajectory. As can be seen from FIG. 7, compared with the integrated prediction model with a long short-term memory (LSTM) model, a DNN model, a bidirectional long short-term memory (BILSTM) model, and a non-integrated prediction model, a model prediction control result based on the integrated prediction model is better than that of the non-integrated model, and may also be very close to that of a single prediction model. The abscissa is time in seconds (S), and the ordinate is power level, which is used to indicate a range of changes in the power level.

In the autonomous control method of a nuclear reactor, by integrating the mathematical model and the machine learning model, that is, combining advantages of different reactor models, control accuracy is improved, and an influence of detected noise pollution is reduced.

By performing trajectory optimization according to the integrated prediction model and the target state trajectory to obtain a control action combination of the nuclear reactor, wherein the control action combination causes a deviation between the target state trajectory and the reactor full-state trajectory to reach a preset value and meet dynamic evolution characteristics of the reactor, and performing autonomous control on the nuclear reactor on the basis of the control action combination, multi-objective operation optimization is realized in a large-state space, insufficiencies of PID single-input single-output or multi-input single-output control are solved, accuracy of autonomous control over the nuclear reactor is effectively improved by dynamic programming, and predictive control over the integrated model of the reactor is realized.

It should be understood that, although the steps in the flowchart above are shown in sequence as indicated by the arrows, the steps are not necessarily performed in the order indicated by the arrows. Unless otherwise clearly specified herein, the steps are performed without any strict sequence limitation, and may be performed in other orders. In addition, at least some steps in the flowchart above may include a plurality of steps or a plurality of stages, and such steps or stages are not necessarily performed at a same moment, and may be performed at different moments. The steps or stages are not necessarily performed in sequence, and the steps or stages and at least some of other steps or steps or stages of other steps may be performed in turn or alternately.

Based on a same inventive concept, embodiments of the present disclosure further provide an autonomous control apparatus of a nuclear reactor configured to the autonomous control method of a nuclear reactor as referred to above. The implementation solution to the problem provided in the apparatus is similar to that described in the above method. Therefore, specific limitations in one or more embodiments of the autonomous control apparatus of a nuclear reactor provided below may be obtained with reference to the limitations on the autonomous control method of a nuclear reactor above. Details are not described herein again.

In an embodiment, as shown in FIG. 8, an autonomous control apparatus of a nuclear reactor is provided, including a determination module 802, a trajectory optimization module 804, and a control module 806.

The determination module 802 is configured to determine a target state trajectory and a reactor full-state trajectory of a nuclear reactor.

The trajectory optimization module 804 is configured to perform trajectory optimization on the reactor full-state trajectory according to the target state trajectory to obtain a control action combination of the nuclear reactor. The control action combination causes a deviation between the target state trajectory and the reactor full-state trajectory to reach a preset value and meet dynamic evolution characteristics of the reactor.

The control module 806 is configured to perform autonomous control on the nuclear reactor on the basis of the control action combination.

In the autonomous control apparatus of a nuclear reactor, by performing trajectory optimization on the reactor full-state trajectory according to the target state trajectory to obtain a control action combination of the nuclear reactor, wherein the control action combination causes a deviation between the target state trajectory and the reactor full-state trajectory to reach a preset value and meet dynamic evolution characteristics of the reactor, and performing autonomous control on the nuclear reactor on the basis of the control action combination, multi-objective operation optimization is realized in a large-state space, insufficiencies of PID single-input single-output or multi-input single-output control are solved, and accuracy of autonomous control over the nuclear reactor is effectively improved by dynamic programming.

Optionally, in an embodiment, the determination module 802 is further configured to determine the target state trajectory of the nuclear reactor.

Optionally, in an embodiment, the autonomous control apparatus of a nuclear reactor further includes a prediction module configured to input full-state parameters of the nuclear reactor into a pre-built integrated prediction model for prediction to obtain the reactor full-state trajectory.

Optionally, in an embodiment, the autonomous control apparatus of a nuclear reactor further includes a building module and an integration module.

The building module is configured to pre-build a mathematical model and a machine learning model of the nuclear reactor. The machine learning model includes at least a DNN prediction model, a RNN prediction model, and a Gaussian regression based prediction model.

The integration module is configured to obtain the integrated prediction model by integrating the mathematical model and the machine learning model.

Optionally, in an embodiment, the building module is configured to build the mathematical model of the nuclear reactor. The mathematical model includes at least a core neutron point reactor dynamics model, a thermal hydraulic model, a reactivity feedback model, and a nuclide decay model.

Optionally, in an embodiment, the autonomous control apparatus of a nuclear reactor further includes a training module configured to acquire reactor operating samples of the nuclear reactor; and train different types of built machine learning models according to the reactor operating samples to obtain a trained machine learning model.

Optionally, in an embodiment, the trajectory optimization module 804 is further configured to determine reaction states and corresponding control actions in the reactor full-state trajectory;

determine a first trajectory including the reactor states and the control actions on the basis of the dynamic evolution characteristics of the reactor;

linearize the first trajectory through Taylor approximation to obtain a second trajectory under an optimal strategy; and

iterate the second trajectory until the second trajectory converges to the target state trajectory to obtain the control action combination of the nuclear reactor.

Optionally, in an embodiment, the trajectory optimization module 804 is further configured to update next reactor state of the first trajectory according to an actual state transition function.

The modules in the autonomous control apparatus of a nuclear reactor above may be implemented entirely or partially by software, hardware, or a combination thereof. The above modules may be built in or independent of a processor of a computer device in a hardware form, or may be stored in a memory of the computer device in a software form, to facilitate the processor to invoke and perform operations corresponding to the above modules.

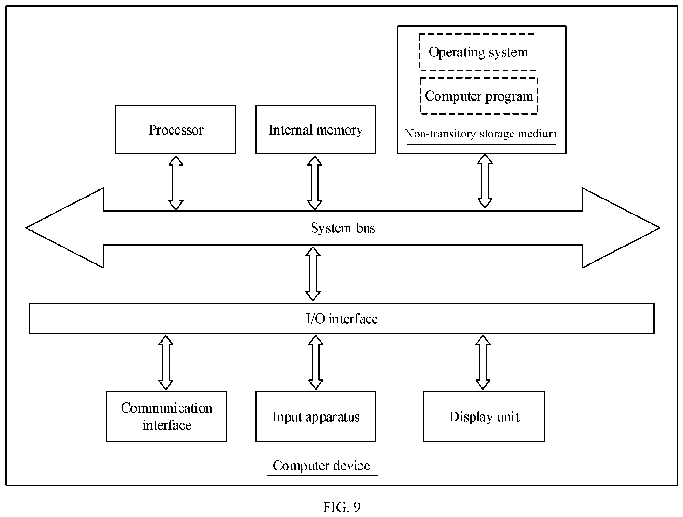

In an exemplary embodiment, a computer device is provided. The computer device may be a terminal, and a diagram of an internal structure thereof may be shown in FIG. 9. The computer device includes a processor, a memory, a communication interface, a display screen, and an input apparatus connected by using a system bus. The processor of the computer device is configured to provide computing and control capabilities. The memory of the computer device includes a non-transitory storage medium and an internal memory. The non-transitory storage medium stores an operating system and a computer program. The internal memory provides an environment for running of the operating system and the computer program in the non-transitory storage medium. The communication interface of the computer device is configured to communicate with an external terminal in a wired or wireless manner. The wireless manner may be implemented by WIFI, a mobile cellular network, near field communication (NFC), or other technologies. The computer program is executed by the processor to implement an autonomous control method of a nuclear reactor. The display screen of the computer device may be a liquid crystal display screen or an electronic ink display screen. The input apparatus of the computer device may be a touch layer covering the display screen, or may be a key, a trackball, or a touchpad disposed on a housing of the computer device, or may be an external keyboard, a touchpad, a mouse, or the like.

Those skilled in the art may understand that the structure shown in FIG. 9 is only a block diagram of a partial structure related to a solution of the present disclosure, which does not constitute a limitation on the computer device to which the solution of the present disclosure is applied. Specifically, the controller may include more or fewer components than those shown in the figure, or some components may be combined, or a different component deployment may be used.

In an embodiment, a computer device is provided, including a memory and a processor. The memory stores a computer program. The processor, when executing the computer program, implements the following steps:

determining a target state trajectory and a reactor full-state trajectory of a nuclear reactor;
performing trajectory optimization on the reactor full-state trajectory according to the target state trajectory to obtain a control action combination of the nuclear reactor, the control action combination being used for ensuring that a deviation between the target state trajectory and the reactor full-state trajectory reaches a preset value and meets dynamic evolution characteristics of the reactor; and
performing autonomous control on the nuclear reactor on the basis of the control action combination.

In an embodiment, the processor, when executing the computer program, further implements the following steps:

determining the target state trajectory of the nuclear reactor; and
inputting full-state parameters of the nuclear reactor into a pre-built integrated prediction model for prediction to obtain the reactor full-state trajectory.

In an embodiment, the processor, when executing the computer program, further implements the following steps:

pre-building a mathematical model and a machine learning model of the nuclear reactor; and
obtaining the integrated prediction model by integrating the mathematical model and the machine learning model.

In an embodiment, the processor, when executing the computer program, further implements the following steps:

building the mathematical model of the nuclear reactor, the mathematical model including at least a core neutron point reactor dynamics model, a thermal hydraulic model, a reactivity feedback model, and a nuclide decay model;

acquiring reactor operating samples of the nuclear reactor; and

training different types of built machine learning models according to the reactor operating samples to obtain a trained machine learning model.

In an embodiment, the processor, when executing the computer program, further implements the following steps:

determining reaction states and corresponding control actions in the reactor full-state trajectory;

determining a first trajectory including the reactor states and the control actions on the basis of the dynamic evolution characteristics of the reactor;

linearizing the first trajectory through Taylor approximation to obtain a second trajectory under an optimal strategy; and

iterating the second trajectory until the second trajectory converges to the target state trajectory to obtain the control action combination of the nuclear reactor.

In an embodiment, the processor, when executing the computer program, further implements the following steps: updating next reactor state of the first trajectory according to an actual state transition function, and performing the step of linearizing the first trajectory through Taylor approximation to obtain a second trajectory under an optimal strategy.

In an embodiment, the processor, when executing the computer program, further implements the following: the machine learning model including at least a DNN prediction model, a RNN prediction model, and a Gaussian regression based prediction model.

In an embodiment, a computer-readable storage medium is provided, having a computer program stored therein. When the computer program is executed by a processor, the following steps are implemented:

determining a target state trajectory and a reactor full-state trajectory of a nuclear reactor;

performing trajectory optimization on the reactor full-state trajectory according to the target state trajectory to obtain a control action combination of the nuclear reactor, the control action combination being used for ensuring that a deviation between the target state trajectory and the reactor full-state trajectory reaches a preset value and meets dynamic evolution characteristics of the reactor; and

performing autonomous control on the nuclear reactor on the basis of the control action combination.

In an embodiment, when the computer program is executed by a processor, the following steps are further implemented:

determining the target state trajectory of the nuclear reactor; and

inputting full-state parameters of the nuclear reactor into a pre-built integrated prediction model for prediction to obtain the reactor full-state trajectory. In an embodiment, when the computer program is executed by a processor, the following steps are further implemented:

pre-building a mathematical model and a machine learning model of the nuclear reactor; and

obtaining the integrated prediction model by integrating the mathematical model and the machine learning model.

In an embodiment, when the computer program is executed by a processor, the following steps are further implemented:

building the mathematical model of the nuclear reactor, the mathematical model including at least a core neutron point reactor dynamics model, a thermal hydraulic model, a reactivity feedback model, and a nuclide decay model;

acquiring reactor operating samples of the nuclear reactor; and

training different types of built machine learning models according to the reactor operating samples to obtain a trained machine learning model.

In an embodiment, when the computer program is executed by a processor, the following steps are further implemented:

determining reaction states and corresponding control actions in the reactor full-state trajectory;

determining a first trajectory including the reactor states and the control actions on the basis of the dynamic evolution characteristics of the reactor;

linearizing the first trajectory through Taylor approximation to obtain a second trajectory under an optimal strategy; and

iterating the second trajectory until the second trajectory converges to the target state trajectory to obtain the control action combination of the nuclear reactor.

In an embodiment, when the computer program is executed by a processor, the following steps are further implemented:
updating next reactor state of the first trajectory according to an actual state transition function, and performing the step of linearizing the first trajectory through Taylor approximation to obtain a second trajectory under an optimal strategy.

In an embodiment, when the computer program is executed by a processor, the following is further implemented: the machine learning model including at least a DNN prediction model, a RNN prediction model, and a Gaussian regression based prediction model.

In an embodiment, a computer program product is provided, including a computer program. When the computer program is executed by a processor, the following steps are implemented:

determining a target state trajectory and a reactor full-state trajectory of a nuclear reactor;
performing trajectory optimization on the reactor full-state trajectory according to the target state trajectory to obtain a control action combination of the nuclear reactor, the control action combination being used for ensuring that a deviation between the target state trajectory and the reactor full-state trajectory reaches a preset value and meets dynamic evolution characteristics of the reactor; and
performing autonomous control on the nuclear reactor on the basis of the control action combination.

In an embodiment, when the computer program is executed by a processor, the following steps are further implemented:

determining the target state trajectory of the nuclear reactor; and
inputting full-state parameters of the nuclear reactor into a pre-built integrated prediction model for prediction to obtain the reactor full-state trajectory. In an embodiment, when the computer program is executed by a processor, the following steps are further implemented:

pre-building a mathematical model and a machine learning model of the nuclear reactor; and
obtaining the integrated prediction model by integrating the mathematical model and the machine learning model.

In an embodiment, when the computer program is executed by a processor, the following steps are further implemented:

building the mathematical model of the nuclear reactor, the mathematical model including at least a core neutron point reactor dynamics model, a thermal hydraulic model, a reactivity feedback model, and a nuclide decay model;
acquiring reactor operating samples of the nuclear reactor; and
training different types of built machine learning models according to the reactor operating samples to obtain a trained machine learning model.

In an embodiment, when the computer program is executed by a processor, the following steps are further implemented:

determining reaction states and corresponding control actions in the reactor full-state trajectory;
determining a first trajectory including the reactor states and the control actions on the basis of the dynamic evolution characteristics of the reactor;
linearizing the first trajectory through Taylor approximation to obtain a second trajectory under an optimal strategy; and
iterating the second trajectory until the second trajectory converges to the target state trajectory to obtain the control action combination of the nuclear reactor.

In an embodiment, when the computer program is executed by a processor, the following steps are further implemented:
updating next reactor state of the first trajectory according to an actual state transition function, and performing the step of linearizing the first trajectory through Taylor approximation to obtain a second trajectory under an optimal strategy.

In an embodiment, when the computer program is executed by a processor, the following is further implemented: the machine learning model including at least a DNN prediction model, a RNN prediction model, and a Gaussian regression based prediction model.

It is to be noted that user information (including, but not limited to, user equipment information, user personal information, and the like) and data (including, but not limited to, data for analysis, stored data, displayed data, and the like) as referred to in the present disclosure are information and data authorized by the user or fully authorized by all parties.

Those of ordinary skill in the art may understand that some or all procedures in the methods in the foregoing embodiments may be implemented by a computer program instructing related hardware, the computer program may be stored in a non-transitory computer-readable storage medium, and when the computer program is executed, the procedures in the foregoing method embodiments may be implemented. Any reference to the memory, database, or other media used in the embodiments provided in the present disclosure may include at least one of a non-transitory memory and a transitory memory. The database as referred to in the embodiments provided in the present disclosure may include at least one of a relational database and a non-relational database. The non-relational database may include a blockchain-based distributed database, and the like, but is not limited thereto. The processor as referred to in the embodiments provided in the present disclosure may be a general-purpose processor, a central processing unit, a graphics processor, a digital signal processor, a programmable logic device, a data processing logic device based on quantum computing, and the like, but is not limited thereto.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the present disclosure. It should be noted that those of ordinary skill in the art may further make variations and improvements without departing from the conception of the present disclosure, and these all fall within the protection scope of the present disclosure. Therefore, the patent protection scope of the present disclosure should be subject to the appended claims.

## Claims

1. An autonomous control method of a nuclear reactor, comprising:

   determining a target state trajectory and a reactor full-state trajectory of a nuclear reactor;
   performing trajectory optimization on the reactor full-state trajectory according to the target state trajectory to obtain a control action combination of the nuclear reactor, the control action combination being used for ensuring that a deviation between the target state trajectory and the reactor full-state trajectory reaches a preset value and meets dynamic evolution characteristics of the reactor;
   performing autonomous control on the nuclear reactor on the basis of the control action combination.

2. The method according to claim 1, wherein the determining the target state trajectory and the reactor full-state trajectory of the nuclear reactor comprises:

   determining the target state trajectory of the nuclear reactor;
   inputting full-state parameters of the nuclear reactor into a pre-built integrated prediction model for prediction to obtain the reactor full-state trajectory.

3. The method according to claim 2, further comprising: prior to determining the target state trajectory of the nuclear reactor,

   pre-building a mathematical model and a machine learning model of the nuclear reactor;
   obtaining the integrated prediction model by integrating the mathematical model and the machine learning model.

4. The method according to claim 3, wherein the pre-building the mathematical model and the machine learning model of the nuclear reactor comprises:

   building the mathematical model of the nuclear reactor, the mathematical model comprising at least a core neutron point reactor dynamics model, a thermal hydraulic model, a reactivity feedback model, and a nuclide decay model;
   acquiring reactor operating samples of the nuclear reactor;
   training different types of built machine learning models according to the reactor operating samples to obtain a trained machine learning model.

5. The method according to claim 1, wherein the performing trajectory optimization on the reactor full-state trajectory according to the target state trajectory to obtain the control action combination of the nuclear reactor comprises:

determining reaction states and corresponding control actions in the reactor full-state trajectory;

determining a first trajectory comprising the reactor states and the control actions on the basis of the dynamic evolution characteristics of the reactor;

linearizing the first trajectory through Taylor approximation to obtain a second trajectory under an optimal strategy;

iterating the second trajectory until the second trajectory converges to the target state trajectory to obtain the control action combination of the nuclear reactor.

6. The method according to claim 5, further comprising: prior to iterating the second trajectory until the second trajectory converges to the target state trajectory to obtain the control action combination of the nuclear reactor,

updating next reactor state of the first trajectory according to an actual state transition function, and performing the step of linearizing the first trajectory through Taylor approximation to obtain a second trajectory under an optimal strategy.

7. The method according to claim 3, wherein the machine learning model comprises at least a deep neural network (DNN) prediction model, a recurrent neural network (RNN) prediction model, and a Gaussian regression based prediction model.

8. An autonomous control apparatus of a nuclear reactor, comprising:

a determination module configured to determine a target state trajectory and a reactor full-state trajectory of a nuclear reactor;

a trajectory optimization module configured to perform trajectory optimization on the reactor full-state trajectory according to the target state trajectory to obtain a control action combination of the nuclear reactor, the control action combination causing a deviation between the target state trajectory and the reactor full-state trajectory to reach a preset value and meet dynamic evolution characteristics of the reactor;

a control module configured to perform autonomous control on the nuclear reactor on the basis of the control action combination.

9. The apparatus according to claim 8, wherein the determination module is configured to determine the target state trajectory of the nuclear reactor; and

the apparatus further comprises:

a prediction module configured to input full-state parameters of the nuclear reactor into a pre-built integrated prediction model for prediction to obtain the reactor full-state trajectory.

10. The apparatus according to claim 9, wherein the apparatus further comprises:

a building module configured to pre-build a mathematical model and a machine learning model of the nuclear reactor;

an integration module configured to obtain the integrated prediction model by integrating the mathematical model and the machine learning model.

11. The apparatus according to claim 10, wherein the building module is further configured to build the mathematical model of the nuclear reactor, the mathematical model comprising at least a core neutron point reactor dynamics model, a thermal hydraulic model, a reactivity feedback model, and a nuclide decay model; and

the apparatus further comprises:

a training module configured to acquire reactor operating samples of the nuclear reactor; and

train different types of built machine learning models according to the reactor operating samples to obtain a trained machine learning model.

12. The apparatus according to claim 8, wherein the trajectory optimization module is further configured to:

determine reaction states and corresponding control actions in the reactor full-state trajectory;

determine a first trajectory comprising the reactor states and the control actions on the basis of the dynamic evolution characteristics of the reactor;

linearize the first trajectory through Taylor approximation to obtain a second trajectory under an optimal strategy;

iterate the second trajectory until the second trajectory converges to the target state trajectory to obtain the control action combination of the nuclear reactor.

**13.** The apparatus according to claim 12, further comprising:
an update module configured to update next reactor state of the first trajectory according to an actual state transition function.

**14.** A computer device, comprising a memory and a processor, the memory storing a computer program, wherein the processor, when executing the computer program, implements steps of the method according to any one of claims 1 to 7.

**15.** A computer-readable storage medium, having a computer program stored therein, wherein steps of the method according to any one of claims 1 to 7 are implemented when the computer program is executed by a processor.

102

Determine a target state trajectory and a reactor full-state trajectory of a nuclear reactor

104

Perform trajectory optimization on the reactor full-state trajectory according to the target state trajectory to obtain a control action combination of the nuclear reactor

106

Perform autonomous control on the nuclear reactor on the basis of the control action combination

FIG. 1

Mathematical model → High-precision model

... 

Point reactor model

Data driving → Machine learning model 1

...

Machine learning model N

→ Stacking learning strategy → Integrated prediction model

FIG. 2

Input layer    Hidden layer 1    Hidden layer 2    Hidden layer N    Output layer

$S_t$

$a_t$

$S_{t+1}$

FIG. 3

FIG. 4

FIG. 5

602

Pre-build a mathematical model and a machine learning model of the nuclear reactor

604

Obtain the integrated prediction model by integrating the mathematical model and the machine learning model

606

Determine the target state trajectory of the nuclear reactor

608

Input full-state parameters of the nuclear reactor into a pre-built integrated prediction model for prediction to obtain the reactor full-state trajectory

610

Determine reaction states and corresponding control actions in the reactor full-state trajectory

612

Determine a first trajectory including the reactor states and the control actions on the basis of the dynamic evolution characteristics of the reactor

614

Linearize the first trajectory through Taylor approximation to obtain a second trajectory under an optimal strategy

616

Iterate the second trajectory until the second trajectory converges to the target state trajectory to obtain the control action combination of the nuclear reactor

618

Perform autonomous control on the nuclear reactor on the basis of the control action combination

FIG. 6

Target operating trajectory

Integrated
prediction
model    MSE=9.11e-05
σ=2% MSE=6.45e-05
LSTM-4500epoch MSE=7.33e-04
DNN-4500epoch MSE=2.94e-04
BILSTM MSE=1.39e-04
target   Target operating trajectory

FIG. 7

Autonomous control apparatus of a nuclear reactor

Determination module 802

Trajectory optimization module 804

Control module 806

FIG. 8

FIG. 9

## INTERNATIONAL SEARCH REPORT

| | International application No. |
|---|---|
| | **PCT/CN2022/120389** |

| A. | CLASSIFICATION OF SUBJECT MATTER |
|---|---|
| | G05B 13/04(2006.01)i |

According to International Patent Classification (IPC) or to both national classification and IPC

| B. | FIELDS SEARCHED |
|---|---|

Minimum documentation searched (classification system followed by classification symbols)
  G05B13/-

Documentation searched other than minimum documentation to the extent that such documents are included in the fields searched

Electronic data base consulted during the international search (name of data base and, where practicable, search terms used)
  CNKI, CNPAT, EPODOC, WPI: 中广核, 中国广核, 岭东核电, 反应堆, 控制, 轨迹, 预测, 模型, 集成, 数理模型, 机器学习, 神经网络, reactor, control, predictive, model, stack, theoretical model, machine learning, neural network, RNN, DNN

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114675538 A (CHINA GENERAL NUCLEAR POWER CO., LTD. et al.) 28 June 2022 (2022-06-28) <br> description, paragraphs [0054]-[0145], and figures 1-9 | 1-15 |
| X | 方愿捷 等 (FANG, Yuanjie et al.). "量测噪声环境下反应堆功率模型预测控制研究 (Research on Nuclear Reactor Power Level Control with Measurement Noise Based on Model Predictive Control Method)" <br> 安徽工程大学学报 *(Journal of Anhui Polytechnic University)*, <br> Vol. 36, No. 3, 30 June 2021 (2021-06-30), <br> ISSN: 2095-0977, <br> sections 1-2 | 1, 8, 14-15 |
| Y | 方愿捷 等 (FANG, Yuanjie et al.). "量测噪声环境下反应堆功率模型预测控制研究 (Research on Nuclear Reactor Power Level Control with Measurement Noise Based on Model Predictive Control Method)" <br> 安徽工程大学学报 *(Journal of Anhui Polytechnic University)*, <br> Vol. 36, No. 3, 30 June 2021 (2021-06-30), <br> ISSN: 2095-0977, <br> sections 1-2 | 2-7, 9-13 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **17 November 2022** | **29 November 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/120389**

**C.     DOCUMENTS CONSIDERED TO BE RELEVANT**

| Category* | Citation of document, with indication, where appropriate, of the relevant passages | Relevant to claim No. |
|---|---|---|
| Y | CN 112507611 A (SOUTH CHINA UNIVERSITY OF TECHNOLOGY) 16 March 2021 (2021-03-16)<br>    description, paragraphs [0073]-[0099], and figure 5 | 2-7, 9-13 |
| A | CN 112380776 A (SOUTH CHINA UNIVERSITY OF TECHNOLOGY) 19 February 2021 (2021-02-19)<br>    entire document | 1-15 |
| A | CN 101236409 A (SHANGHAI HI-TECH CONTROL SYSTEM CO., LTD.) 06 August 2008 (2008-08-06)<br>    entire document | 1-15 |
| A | CN 105759611 A (SOUTH CHINA UNIVERSITY OF TECHNOLOGY) 13 July 2016 (2016-07-13)<br>    entire document | 1-15 |
| A | CN 112886039 A (TSINGHUA SHENZHEN INTERNATIONAL GRADUATE SCHOOL) 01 June 2021 (2021-06-01)<br>    entire document | 1-15 |
| A | JP 2014038006 A (MITSUBISHI HEAVY INDUSTRIES, LTD.) 27 February 2014 (2014-02-27)<br>    entire document | 1-15 |

Form PCT/ISA/210 (second sheet) (January 2015)

**INTERNATIONAL SEARCH REPORT**
Information on patent family members

International application No.

**PCT/CN2022/120389**

| Patent document cited in search report | | | Publication date (day/month/year) | Patent family member(s) | | | Publication date (day/month/year) |
|---|---|---|---|---|---|---|---|
| CN | 114675538 | A | 28 June 2022 | None | | | |
| CN | 112507611 | A | 16 March 2021 | None | | | |
| CN | 112380776 | A | 19 February 2021 | None | | | |
| CN | 101236409 | A | 06 August 2008 | CN | 100547506 | C | 07 October 2009 |
| CN | 105759611 | A | 13 July 2016 | None | | | |
| CN | 112886039 | A | 01 June 2021 | CN | 112886039 | B | 23 November 2021 |
| JP | 2014038006 | A | 27 February 2014 | EP | 2884496 | A1 | 17 June 2015 |
| | | | | US | 2015310945 | A1 | 29 October 2015 |
| | | | | WO | 2014027646 | A1 | 20 February 2014 |
| | | | | JP | 6139074 | B2 | 31 May 2017 |
| | | | | EP | 2884496 | B1 | 06 September 2017 |

Form PCT/ISA/210 (patent family annex) (January 2015)

**REFERENCES CITED IN THE DESCRIPTION**

**Patent documents cited in the description**

• CN 2022103156590